# EUROPÄISCHE PATENTANMELDUNG

(11) **EP 0 732 165 A1**
(43) Veröffentlichungstag der Anmeldung: **18.09.1996**
(21) Anmeldenummer: 96102552.5
(22) Anmeldetag: 21.02.1996
(51) Int. Cl.: B23D 51/10

(54) **Handgeführte Stichsägemaschine**

(30) Priorität: 16.03.1995 DE 19509542
(71) Anmelder: ROBERT BOSCH GMBH, 70442 Stuttgart (DE)
(72) Erfinder: Hölderlin, Andreas, Dr.-Ing., D-74354 Besigheim (DE); di Nicolantonio, Aldo, Dipl.-Masch. Ing. ETH, CH-4565 Recherswil (CH); Kaiser, Hans, CH-3297 Leuzigen (CH); Kaech, Beat, CH-4528 Zuchwil (CH); Stooss, Paul, CH-4534 Flumenthal (CH); Gentinetta, René, CH-3942 Niedergesteln (CH); Eder, Herbert, CH-4566 Halten (CH); Holzer, Peter, CH-4500 Solothurn (CH)

(57) **Zusammenfassung**

Für eine Stichsägemaschine mit einer Einrichtung zum Spannen des Sägeblatts (22) am unteren Ende einer Hubstange (18), wobei eine axial verschieblich und drehbar an der Hubstange (18) angeordnete Spannhülse (30) an ihrem freien unteren Ende einen nach innen ragenden, umlaufenden Kragen mit einer Durchtrittsöffnung (38) und einem radialen Schlitz (40) besitzt, wobei sich der Kragen (36) in der Spannposition axial gegen die Nasen (91, 92) des Sägeblatts (22) axial abstützt und damit das Sägeblatteinspannende gegen die untere Stirnseite der Hubstange (18) bzw. gegen ein federndes Zwischenstück bringt, wird das Sägeblatt (22) präziser und mit hoher Festigkeit gespannt, indem eine Spannzange (54) von der Spannhülse (30) umgriffen wird und durch Drehen der Spannhülse (30) in der einen Richtung in die Spann- und durch Drehen in die andere Richtung in die Löseposition bringbar ist.

## Beschreibung

### Stand der Technik

Die Erfindung geht aus von einer handgeführten Stichsägemaschine nach der Gattung des Anspruchs 1.

Es sind bereits aus der DE-OS 41 02 011 Stichsägen bekannt, deren unteres Hubstangenende ein Sägeblatt mit zwei einander gegenüberliegenden, quer zur Sägeblattlängsachse verlaufenden Nasen aufnimmt. Das Sägeblatteinspannende wird bis zum Anschlagen der Nasen am unteren Hubstangenende axial in die Hubstange eingeführt und dort zentriert und gespannt.

Die bekannte Stichsäge hat den Nachteil, daß die Zentriermitel zur Aufnahme der Sägeblätter optimal nur für Sägeblätter einer einzigen, bestimmten Stärke geeignet sind. Da es aber für unterschiedliche Einsatzzwecke unterschiedlich starke Sägeblätter gibt, müssen - im Interesse universeller Verwendbarkeit - Stichsägen für die Aufnahme möglichst aller dieser unterschiedlichen Sägeblätter geeignet sein. Daher wurde bei den bekannten Stichsägen ein Kompromiß für die Ausgestaltung der Spanneinrichtung getroffen, indem der Zentrierschlitz zur Aufnahme des Sägeblatteinspannendes so dimensioniert ist, daß auch das stärkste Sägeblatt eintreten kann. Damit wurde inkauf genommen, daß der Sägeblattyp mit der geringsten Stärke ein gewisses seitliches Spiel im Zentrierschlitz besitzt. Durch dieses Spiel kann es zu ungewollten Schieflagen des Sägeblatts gegenüber der Hubstangenlängsachse kommen. Hier besteht für den Sägeblattyp mit der geringsten Stärke die Gefahr, daß der Schnittkanal nicht mit 90°, sondern geneigt gegenüber der Auflagefläche des Werkstücks verläuft. Dadurch wird die Qualität der Arbeitsergebnisse beim Sägen gemindert.

Gemäß der EP 404 764 ist eine weitere Stichsäge bekannt. In deren Spanneinrichtung sind die dem Einspannende des Sägeblatts abgewandten Schmalseiten der Nasen in V-förmigen Nuten zentriert. Das Einspannende des Sägeblattschafts ist in einer Konusbohrung zentriert. Dabei werden durch Federmittel das Teil mit der Konusbohrung und das Teil mit den V-Nuten axial gegeneinander verspannt. Dadurch erhält das Sägeblatt, unabhängig von seiner Stärke, einen festen Sitz, allerdings nur mit Hilfe kleinen Spannflächen und in der Folge hoher Flächenpressung.

Außerdem sind gemäß der US 3 750 283 Einrichtungen zum Spannen von Sägeblättern für Stichsägen bekannt, bei denen das untere Ende der Hubstange eine drehbare Hülse trägt, die sich beim Verdrehen axial verschiebt, dabei das Sägeblatt an den Nasen untergreift und axial bis zum Anschlag des Sägeblattschaftendes an einem Schlitzende der Hubstange zur Anlage bringt.

Die bekannten Einrichtungen zum Spannen von Sägeblättern haben eine gute Zentrier- und Haltewirkung. Das Sägeblatteinspannende liegt jedoch nur an relativ kleinen Spannflächen an und ist nicht seine gesamte Länge gegen Verbiegen gesichert. Aus diesem Grund kann es zu unerwünschten Schwingungen des Sägeblatts quer zur Vorschubrichtung kommen.

### Vorteile der Erfindung

Die erfindungsgemäße Stichsäge mit dem kennzeichnenden Merkmal des Anspruchs 1 hat demgegenüber den Vorteil, daß sie eine Einrichtung zum Spannen des Sägeblattes mit großen Halteflächen zum spielfreien Abstützen auf dem Sägeblattschaft besitzt, die starke und dünne Sägeblätter in gleicher Weise exakt zentriert stabil halten und ein knicken bzw. Biegen des Einspannendes verhindern. Dadurch sind Schieflagen sowie Querschwingungen bzw. Drehschwingungen des Sägeblattes so gut wie ausgeschlossen und die Qualität des Sägeschnittes wird wesentlich verbessert. Dadurch kann mit der erfindungsgemäßen Stichsäge nahezu so präzise gesägt werden wie mit Handkreissägen.

Weitere, vorteilhafte Ausgestaltungen der Erfindung ergeben sich aus den abhängigen Ansprüchen.

### Zeichnung

Ein Ausführungsbeispiel der vorliegenden Erfindung ist in der nachfolgenden Beschreibung anhand der zugehörigen Zeichnung näher erläutert.

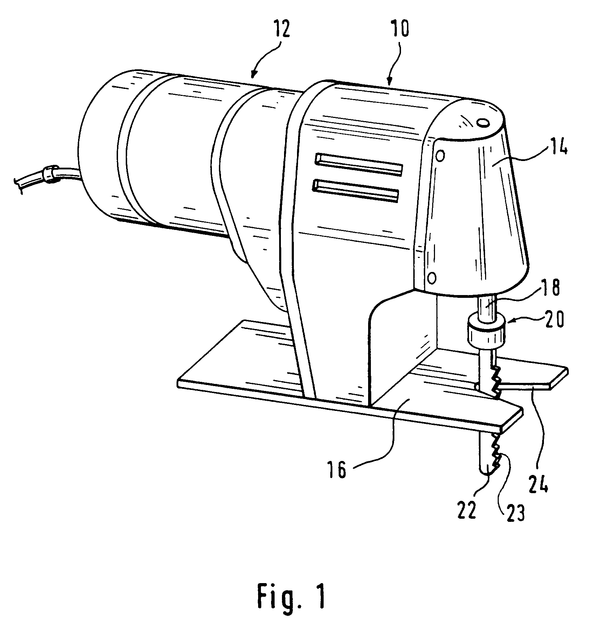

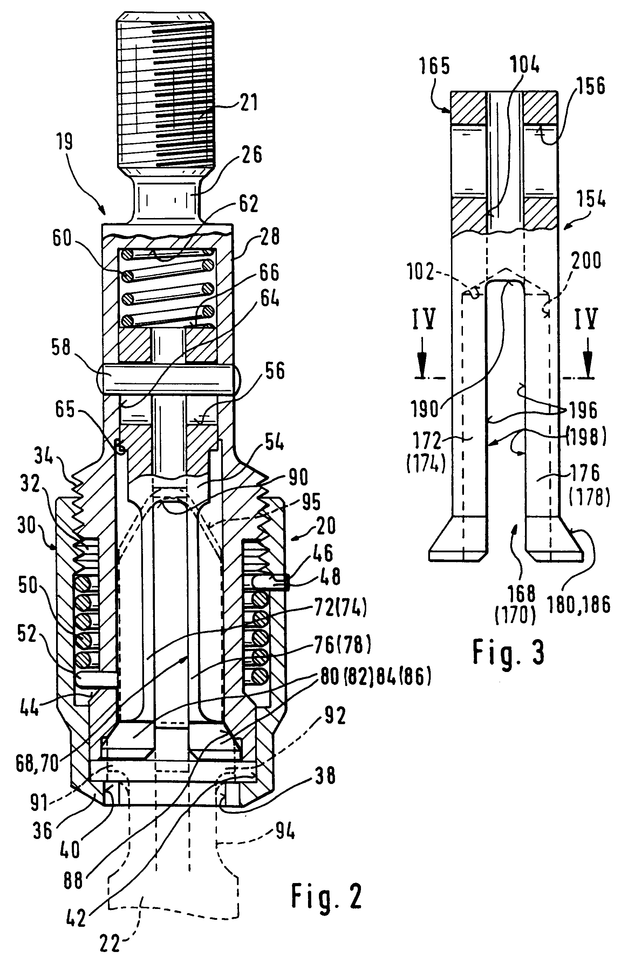

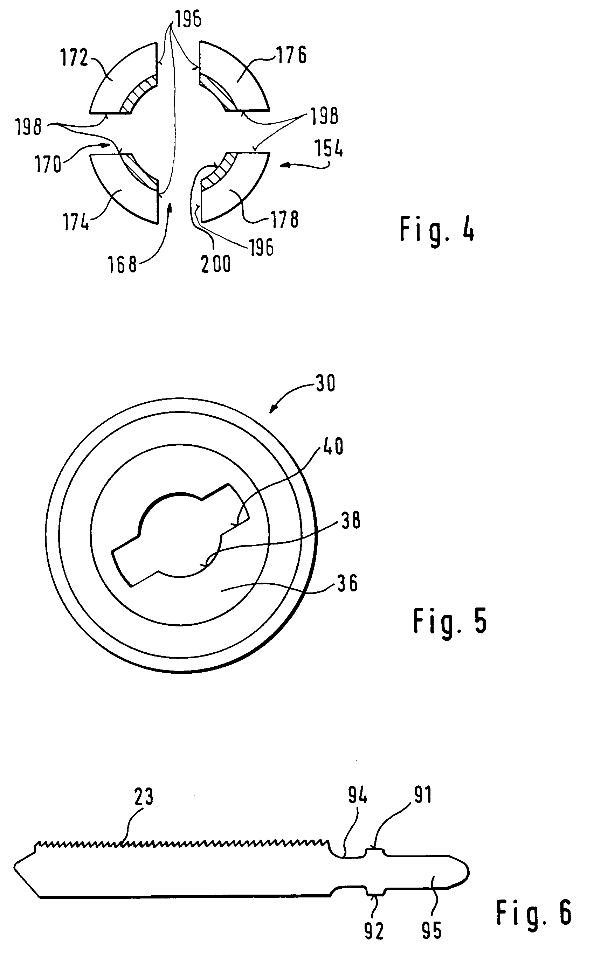

Es zeigen Figur 1 ein Ausführungsbeispiel der erfindungsgemäßen Stichsäge, Figur 2 eine Schnittdarstellung einer Sägeblattspanneinrichtung mit Spannzange, Figur 3 eine Schnittdarstellung einer Spannzange, Figur 4 eine Ansicht der Spannzange gemäß Figur 3 von unten, Figur 5 eine Ansicht der Stirnseite der Spannhülse und Figur 6 ein Sägeblatt für die Stichsäge bzw. Spannzange gemaß den Figuren 1 bis 4.

### Beschreibung des Ausführungsbeispiels

In Figur 1 ist eine Stichsäge 10 mit einem als Griff ausgestalteten Maschinengehäuse 12 gezeigt. An das Maschinengehäuse 12 ist ein Getriebegehäuse 14 angeflanscht, das auf eine Fußplatte 16 montiert ist. Mittels der Fußplatte 16 ist die Stichsäge 10 auf ein nicht dargestelltes Werkstück aufsetzbar bzw. auf diesem führbar.

Eine aus dem Getriebegehäuse 14 nach unten austretende rohrartige Hubstange 18 trägt eine Einrichtung 20 zum Spannen eines Sägeblattes 22, das mit seinem freien Ende bzw. der Zahnseite 23 durch eine V-förmige Ausnehmung 24 der Fußplatte 16 tritt. Von der Einrichtung 20 zum Spannen des Sägeblatts 22 ist eine zylindrische Hülse erkennbar.

In Figur 2 ist ein vergrößerter Längsschnitt eines gesonderten, unteren Teilstücks 19 der nicht mit dargestellten Hubstange 18 gezeigt. Dieses ist mit seinem Gewindestück 21 in die Hubstange 18 einschraubbar.

An das Gewindestück 21 schließt sich ein Einstich 26 an, der in ein Trägerrohr 28 übergeht, das die Einrichtung 20 zum Spannen des Sägeblatts 22 trägt.

Die Einrichtung 20 besteht aus einer Spannhülse 30, die mit einem Innengewinde 32 einen Außengewindebund 34 des Trägerrohrs 28 umgreift.

Die Spannhülse 30 ist an ihrem freien, unteren Ende radial nach innen eingezogen. Der radiale Einzug bildet einen Kragen 36 mit einer kreisrunden Durchtrittsöffnung 38, die von einem radialen Schlitz 40 durchsetzt wird.

Die Spannhülse 30 liegt axial oberhalb des Kragens 36 mit einer innenzylindrischen Gleitfläche 42 an einem Führungsbund 44 des Trägerrohrs 28 an. Im oberen Bereich der Spannhülse 30 greift durch einen radialen Durchbruch 46 von innen nach außen ein Federendstück 48 einer Drehfeder 50. Deren anderes Endstück 52 durchgreift radial nach innen gerichtet das Trägerrohr 28 nahe dem Führungsbund 44.

Im Inneren des Trägerrohrs 28 ist mittig, axial verschieblich eine Spannzange 54 angeordnet, die in ihrem oberen Bereich ein quer verlaufendes Langloch 56 trägt. Durch das Langloch 56 tritt ein Querbolzen 58. Dieser ist in den Seitenwänden des Trägerrohrs 28 axial unverschieblich, gegen Verdrehen und Verlieren gesichert angeordnet.

Im oberen Bereich des Trägerrohrs 28 ist konzentrisch und parallel zu dessen Achse eine Druckfeder 60 angeordnet. Diese stützt sich zwischen einem Boden 62 einer Sackbohrung 64 und der dem Boden 62 gegenüberliegenden, oberen Stirnseite 66 der Spannzange 54 ab. Die Druckfeder 60 sucht die Spannzange 54 axial nach unten zu drücken, d.h. mit dem oberen Bereich ihres Langlochs 56 in Anschlaglage gegenüber dem Querbolzen 58 zu halten.

Die Spannzange 54 trägt zwei rechtwinklich zueinander verlaufende Längsschlitze 68, 70, durch die vier symmetrische Spannbacken 72, 74 und 76, 78 gebildet werden. Die freien Enden der Spannbacken 72 bis 78 tragen außen jeweils einen glockenförmigen Spannkeil 80, 82, 84, 86, von denen jeweils die hinteren 82, 86 durch die vorderen 80, 84 verdeckt und daher nicht sichtbar sind. Zum Verdeutlichen dieses Sachverhalts sind die Bezugszifern der nicht sichtbaren Spannbacken bzw. Spannkeile in der Zeichnung in Klammern gesetzt.

Die Spannkeile 80, 82, 84, 86 stützen sich mit ihren Schrägflächen gegen einen Spannkonus 88, der durch das untere Ende des Trägerrohrs 28 in dessen Innerem gebildet wird. Die Längsschlitze 68, 70 der Spannzange 54 bilden axial in gleicher Höhe ein Schlitzende 90, an dem das freie Ende des Einspannendes des Sägeblatts 22 zur Anlage kommt.

Die Kontur des Sägeblatts 22 ist gestrichelt dargestellt, wobei seitlich hervortretende Nasen 91, 92 und der Sägeblatthals 94 erkennbar sind.

Die Figur 3 zeigt als Einzelheit eine Spannzange 154, die der Spannzange 54 gemäß Figur 2 ähnlich ist. Im Unterschied zu dieser besteht die Spannzange 154 aus einem geraden, zylindrischen Stück mit nur geringer spanender Außenbearbeitung. Die Federwirkung der Spannbacken 172 bis 178 wird durch eine gestrichelt dargestellte Sackbohrung 200 erreicht. Durch diese wird die Stärke der Seitenwände der Spannbacken 172 bis 178 vermindert, so daß diese als Blattfedern wirken und wobei eine Gewichtsersparnis für die Spannzange 154 erreicht wird.

Durch das konische Ende 102 der Sackbohrung 200 im Bereich des oberen Schlitzendes 190 tritt eine Freibohrung 104. An der Schnittkante zwischen Freibohrung 104 und Sackbohrung 200 stützt sich das freie Ende des Sägeblatteinspannendes zentrierend ab und taucht mit einem kleinen Bereich in die Freibohrung 104 ein.

Deutlich erkennbar sind das Langloch 156, die Spannbacken 172 bis 178 und die durch die Längsschlitze 168, 170 gebildeten Spannflächen 196, 198. Der obere Bereich der Spannzange 54 ist als Gleitkolben 65 zum axialen Verschieben der Spannzange 154 im Trägerrohr 28 ausgestaltet.

Wie zu Figur 2 sind die Bezugsziffern der durch Verdeckung nicht sichtbaren Teile in der Zeichnung in Klammern gesetzt.

In Figur 4 ist die Spannzange 154 gemäß Figur 3 in der Ansicht von unten gezeigt. Hier sind die Spannbacken 172 bis 178, gebildet durch die Längsschlitze 168, 170 und die Innenkontur der Sackbohrung 200 deutlich erkennbar.

Figur 5 zeigt eine Ansicht der Spannhülse 30 von unten, wobei die Durchtrittsöffnung 38 im Kragen 36 bzw. in der Stirnseite der Spannhülse 30 und der die Durchtrittsöffnung 38 quer durchtretende radiale Schlitz 40 erkennbar sind.

Figur 6 zeigt das Stichsägeblatt 22 gemäß der Figuren 1 und 2, wobei die Zahnseite 23, das Einspannende 95 die Nasen 91, 92 und der Sägeblatthals 94 deutlich erkennbar sind.

Das Einsetzen und Entnehmen des Sägeblatts 22 geschieht auf folgende Weise: Bei stillstehender Maschine bzw. ruhender Hubstange 18 wird die Spannhülse 30 von Hand um ihre Achse soweit verdreht, bis der radiale Schlitz 40 der Spannhülse 30 zum Schlitz 70 bzw. 68 der Spannzange 54, 154 fluchtet bzw. parallel zur Ebene des Sägeblatts 22 verläuft. Beim Drehen der Spannhülse 30 bewegt diese sich axial nach unten. Die Verdrehung erfolgt entgegen der Kraft der vorgespannten Drehfeder 50. Diese sucht die Spannhülse 30 in der Position geschlossen in ihrer axial obersten Position zu halten bzw. zurückzudrehen.

Fluchtet der radiale Schlitz 40 zur Sägeblattebene, wird das Sägeblatt durch die axiale Verschiebung der Spannzange 54 infolge der Wirkung der Druckfeder 60 axial nach unten verschoben. Dabei öffnen sich die Spannbacken 72 bis 78, wobei das Einspannende 95 des Sägeblatts 22 freigegeben bzw. ausgeworfen wird und somit das Sägeblatt 22 leicht entnommen werden kann.

Die Fluchtungsposition des Radialschlitzes 40 gegenüber der Sägeblattebene bzw. gegenüber dem Längsschlitz 70 wird durch nicht dargestellte Anschlagmittel gesichert, die die Verdrehung der Spannhülse 30 begrenzen.

Zum Einsetzen eines neuen Sägeblatts 22 wird die Spannhülse 30 wiederum in ihre axial unterste Position verdreht, in der der Schlitz 40 zum Schlitz 70 fluchtet. Dann wird das Einspannende 95 des Sägeblatts 22 durch die Schlitze 40, 70 zwischen die Spannbacken 72 bis 78 geführt. Sobald das freie Ende des Einspannschafts 95 das obere Schlitzende 90 der Spannzange 54 auf seinem Verschiebeweg erreicht, verschiebt es die Spannzange 54 entgegen der Druckfeder 60 axial im Trägerrohr 28. Die Spannkeile 80 bis 86 kommen zur Anlage an den Spannkonus 88. Beim weiteren Verschieben der Spannzange 54 axial nach oben werden die Spannkeile 80 bis 86 radial nach innen bewegt. Dadurch kommen die Spannflächen 96 zur Anlage an die Flachseiten des Einspannendes des Sägeblatts 22. Haben die Nasen 91, 92 ihre obere Endlage erreicht im Inneren des Trägerrohrs 28, kann die Spannhülse 30 der Vorspannkraft der Drehfeder 50 folgen und drehen. Dabei erreicht sie ihre axial obere Position am Trägerrohr 28. Bei der Axialbewegung stützt sich der Kragen 36 an die unteren Stirnseiten der Nasen 91, 92 des Sägeblatts 22 und nimmt dieses gemeinsam mit der Spannzange 54 in axialer Richtung mit. Dabei gleiten die Schrägflächen der Spannkeile 80 bis 86 am Spannkonus 88 auf. Dadurch wird die axiale Verschiebung der Spannzange 54 in eine Zangen-Bewegung der Spannbacken 72 bis 78 verwandelt. Bei der Zangen-Bewegung stützen sich die Spannbacken 72 bis 78 auf den Flachseiten des Sägeblatts 22 ab und halten damit das Einspannende 95 des Sägeblatts 22 großflächig biegesteif und verwindungssteif fest.

Dadurch werden Flatterbewegungen und Biegeschwingungen des Sägeblatts 22 vermieden.

Bei einem nicht dargestellten Ausführungsbeispiel einer Spannzange wird diese lediglich durch zwei kreuzweise angeordnete Längsschlitze aus Rundstahl hergestellt. Eine Sackbohrung ist nicht vorhanden. Lediglich eine kleine Zentrierbohrung zur besseren Führung des Sägeblatteinspannendes ist vorgesehen.

## Patentansprüche

1. Handgeführte Stichsägemaschine mit einer Einrichtung (20) zum Spannen des Sägeblatts (22) am unteren Ende einer Hubstange (18), wobei eine axial verschieblich und drehbar an der Hubstange (18) angeordnete Spannhülse (30) an ihrem freien unteren Ende einen nach innen ragenden, umlaufenden Kragen (36) mit einer Durchtrittsöffnung (38) und einem radialen Schlitz (40) besitzt, wobei sich der Kragen (36) in der Spannposition axial an den Nasen (91, 92) des Sägeblatts (22) abstützt und damit das Sägeblatteinspannende (95) gegen die untere Stirnseite der Hubstange (18) bzw. gegen ein federndes Zwischenstück zur Anlage bringt, dadurch gekennzeichnet, daß eine drehfest, verschieblich gegenüber der Hubstange (18) angeordnete Spannzange (54, 154) zur Aufnahme des Sägeblatteinspannendes (95) von der Spannhülse (30) umgriffen wird und durch Drehen der Spannhülse (30) in der einen Richtung in die Spann- und durch Drehen in die andere Richtung in die Freigabeposition gegenüber dem Sägeblatteinspannende (95) bringbar ist.

2. Stichsägemaschine nach Anspruch 1, dadurch gekennzeichnet, daß die Spannzange (54, 154) drehfest gegenüber der Spannhülse (30) im Inneren der Hubstange (18) angeordnet ist.

3. Stichsägemaschine nach Anspruch 1 oder 2, dadurch gekennzeichnet, daß die Spannzange (54, 154) axial federnd verschiebbar gegenüber der Hubstange (18) angeordnet ist.

4. Stichsägemaschine nach einem der Ansprüche 1 bis 3, dadurch gekennzeichnet, daß die Spannzange (54, 154) zwischen mindestens zwei Spannbacken (72, 74, 76, 78; 172, 174, 176, 178) die Flachseiten des Sägeblatts (22) einspannt.

5. Stichsägemaschine nach einem der vorhergehenden Ansprüche, dadurch gekennzeichnet, daß das Einspannende (95) des Sägeblatts (22) sowohl an seinem freien Ende als auch im Bereich seiner Nasen (91, 92) durch die Spannzange (54, 154) zentriert und vollflächig gespannt wird.

6. Stichsägemaschine nach einem der vorhergehenden Ansprüche, dadurch gekennzeichnet, daß die Spannzange (54; 154) mittels des Sägeblatts (22), insbesondere durch das Einspannende (95), spannbetätigt bzw. lösebetätigt wird.

7. Stichsägemaschine nach einem der vorhergehenden Ansprüche, dadurch gekennzeichnet, daß die Spannzange (54; 154) an ihren Spannbacken (72, 74, 76, 78; 172, 174, 176, 178) Schrägflächen trägt, die an Gegenschrägflächen der Hubstange (18) zum Spannen oder Lösen auf- oder abgleiten.

8. Stichsägemaschine nach einem der vorhergehenden Ansprüche, dadurch gekennzeichnet, daß die Durchmesser der Spannzange (54; 154) und ihres Trägerrohrs (28) so groß gewählt sind, daß der Durchmesser der sie umgreifenden Spannhülse (30) zumindest nicht wesentlich größer als der der Hubstange (18) ist, so daß die Spannhülse (30) im unteren Hubstangenlager der Stichsägemaschine (10) führbar ist.

9. Als Teilstück (19) einer Hubstange (18) ausgebildete Einrichtung (20) zum Spannen eines Sägeblatts (22) einer Stichsägemaschine (10) nach dem Oberbegriff des Anspruchs 1, dadurch gekennzeichnet, daß eine drehfest, verschieblich gegenüber der Hubstange (18) angeordnete Spannzange (54, 154) zur Aufnahme des Sägeblatteinspannendes (95) von der Spannhülse (30) umgriffen wird und durch Drehen der Spannhülse (30) in der einen Richtung in die Spann- und durch Drehen in die andere Richtung in die Freigabeposition gegenüber dem Sägeblatteinspannende (95) bringbar ist.

10. Teilstück (19) nach Anspruch 9, dadurch gekennzeichnet, daß es es am unteren Ende des Hubstange (18), insbesondere lösbar, befestigt, vorzugsweise an dieses geschraubt ist.
